# EUROPÄISCHE PATENTSCHRIFT

(11) **EP 1 920 427 B1**
(45) Veröffentlichungstag und Bekanntmachung des Hinweises auf die Patenterteilung: **21.03.2018**
(21) Anmeldenummer: 06763579.7
(22) Anmeldetag: 08.06.2006
(51) Int. Cl.: B42D 15/00, G09F 9/37, B41M 3/14, G02B 26/02

(54) **ANZEIGEVORRICHTUNG MIT FIXIERBAREN BEWEGLICHEN ANZEIGEELEMENTEN**
DISPLAY UNIT COMPRISING DISPLACEABLE DISPLAY ELEMENTS THAT CAN BE FIXED
DISPOSITIF D'AFFICHAGE DOTE D'ELEMENTS D'AFFICHAGE MOBILES POUVANT ETRE FIXES

(30) Priorität: 18.08.2005 DE 102005039524
(43) Veröffentlichungstag der Anmeldung: 14.05.2008
(73) Patentinhaber: Bundesdruckerei GmbH, 10958 Berlin (DE)
(72) Erfinder: PFLUGHOEFFT, Malte, 13347 Berlin (DE); PAESCHKE, Manfred, 16352 Basdorf (DE); MUTH, Oliver, 12277 Berlin (DE); DRESSEL, Olaf, 14641 Wustermark (DE)
(74) Vertreter: Richardt Patentanwälte PartG mbB
(86) Internationale Anmeldenummer: PCT/EP2006/063004
(87) Internationale Veröffentlichungsnummer: WO 2007/020114

(56) Entgegenhaltungen:
- EP-A- 1 562 141
- WO-A-00/36560
- WO-A-03/089250
- US-A1- 2002 075 557
- US-A1- 2002 131 149
- US-B1- 6 340 965

## Beschreibung

Die vorliegende Erfindung betrifft eine Anzeigevorrichtung mit beweglichen Anzeigeelementen.

Anzeigevorrichtungen mit beweglichen Anzeigeelementen sind an sich aus dem Stand der Technik bekannt:

Die US 4,126,854 offenbart ein Anzeigesystem, bei dem die Anzeigetafel eine Mehrzahl von Teilchen umfasst, die eine elektrische Anisotropie aufgrund der halbkugelförmigen Oberflächenbeschichtungen mit unterschiedlichen Zeta-Potential und ihrer Verteilung in einem Volumen einer dielektrischen Flüssigkeit aufweisen und die auch eine optische Anisotropie aufgrund der halbkugelförmigen Oberflächenbeschichtungen mit unterschiedlichen optischen Eigenschaften aufweisen, die auf die Farb- und anderen optischen Eigenschaften der halbkugelförmigen Beschichtungen zurückgeführt werden können. Unter der Einwirkung eines äußeren elektrischen Feldes drehen sich die Teilchen entsprechend ihrer elektrischen Anisotropie unter Liefern einer Anzeige gemäß ihrer optischen Anisotropie. Die Anzeige weist eine Schalltschwelle und Speicherfähigkeit auf.

Die US 4,143,103 offenbart ein Verfahren zur Herstellung einer solchen Anzeige. Die Teilchen werden mit einer lichtdurchsichtigen Flüssigkeit gemischt, die nachfolgend unter Bilden eines elastomeren oder starren Blocks gehärtet wird. Auf das Härten der Flüssigkeit folgend wird der Block in einen Weichmacher getaucht, der durch den Block absorbiert wird und der bewirkt, dass sich der Block, leicht ausdehnt. Die Ausdehnung des Blocks um die Teilchen herum liefert einen mit Weichmacher gefüllten Hohlraum um jedes Teilchen herum, wobei die Hohlräume die Teilchen sich unter Liefern einer Anzeige entsprechend ihrer optischen Anisotropie drehen lassen, aber keine wesentliche Verschiebung der Teilchen erlauben.

Solche aus dem Stand der Technik bekannten Anzeigen werden auch als Drehelement-Anzeige bezeichnet. Typischerweise beinhaltet eine entsprechende Anzeigetafel drehbare Elemente, wie etwa Zylinder, Polyeder oder Kugeln. Diese drehbaren Elemente sind typischerweise in einem festen Substrat eingebettet und ein geringer Zwischenraum zwischen jedem drehbaren Element und dem Substrat ist mit einer Flüssigkeit gefüllt, so dass sich die Elemente in einem sich verändernden elektrischen Feld frei drehen, aber nicht von einem Ort zum anderen wandern können.

Wenn zum Beispiel eine Halbkugel eines drehbaren Elements schwarz ist und die andere weiß ist, kann jeder Bildpunkt durch das an diese Stelle angelegte elektrische Feld an- und ausgeschaltet werden. Mit Hilfe einer Drehelementanzeige lässt sich insbesondere so genanntes "elektronisches Papier", das auch als E-Paper bezeichnet wird, realisieren.
Weitere Ausführungsformen von Drehelementanzeigen, die auf der Drehung von Teilchen aufgrund eines elektrischen Feldes basieren, sind unter anderem bekannt aus WO 03 / 083 561 A2, US 4,438,160, US 5,389,945, US 5,825,529, EP 0 913 803 A2, EP 0 942 405 A2, EP 1 005 008 A2 und EP 0 994 456 B1.
Aus der US 6,340,965 B1 ist ein elektronisches Papier, sog. Gyricon, bekannt, durch welches ein wieder verwendbares Formular zum Ausfüllen durch einen Benutzer gebildet wird.
Ferner ist aus der US 6,753,999 B2 ein Anzeigesystem bekannt geworden, bei dem die Bewegung der Anzeigeelemente aufgrund von Elektrophorese erfolgt.
Aus Lawrence, L.L. "A Magnetic-Particles Display", IEEE Transactions on Electronic Devices, 22,1975, 758 ist ein Anzeigesystem bekannt geworden, bei dem magnetische Partikel aufgrund eines magnetischen Feldes in eine Anzeigeposition gedreht werden.
Ein gemeinsamer Nachteil solcher vorbekannten Anzeigevorrichtungen und von solchem vorbekanntem elektronischem Papier ist, dass dieses nicht für Dokumentationszwecke oder für fälschungssichere Dokumente geeignet ist, da ja die angezeigte Information jederzeit durch eine andere Information überschrieben werden kann. Darüber hinaus ist die Zeitdauer, die eine bistabile Anzeige eine Information darzustellen vermag, begrenzt und die Information kann ebenso durch äußere Einflüsse verloren gehen.
Dem gegenüber liegt der Erfindung die Aufgabe zu Grunde, eine verbesserte Anzeigevorrichtung zu schaffen.

Die der Erfindung zu Grunde liegende Aufgabe wird mit den Merkmalen des Patentanspruchs 1,10,11 und 14 gelöst. Bevorzugte Ausführungsformen der Erfindung sind in den abhängigen Patentansprüchen angegeben.
Erfindungsgemäß wird eine Anzeigevorrichtung mit mehreren Anzeigeelementen, die zur Durchführung eines Schreibvorgangs beweglich angeordnet sind, geschaffen. Im Unterschied zum Stand der Technik hat die Anzeigevorrichtung Mittel zur Fixierung der Anzeigeelemente in den jeweils nach der Durchführung des Schreibvorgangs eingenommenen Positionen. Nach der Fixierung der Anzeigeelemente kann durch einen nachfolgenden weiteren Schreibvorgang keine Änderung der von der Anzeigevorrichtung angezeigten Information vorgenommen werden, da die Anzeigeelemente in ihren Positionen verbleiben.
Die Anzeigevorrichtung kann beispielsweise als sogenannte Drehelementanzeige ausgebildet sein, wobei die Bewegung der Anzeigeelemente aufgrund eines elektrischen und / oder magnetischen Feldes erfolgen kann. Im Gegensatz zu vorbekannten Anzeigevorrichtungen, die auf beweglichen Anzeigeelementen basieren, ist die erfindungsgemäße Anzeigevorrichtung für Dokumente, insbesondere Wert- oder Sicherheitsdokumente, Personalausweise und dergleichen geeignet, da sich die angezeigte Information nach dem Fixieren der Anzeigeelemente nicht mehr ohne Weiteres ändern lässt.
Beispielsweise wird die Anzeigevorrichtung zur Realisierung eines Wert-, Sicherheitsdokuments oder Identifikationsdokument personalisiert, indem die anzuzeigende Information aufgrund eines Schreibvorgangs von der Anzeigevorrichtung wiedergegeben wird. Aufgrund des Schreibvorgangs werden die Anzeigeelemente translatorisch und / oder rotatorisch in ihre jeweiligen Positionen bewegt. Nach der Durchführung des Schreibvorgangs werden die Anzeigeelemente dort fixiert, so dass die angezeigte Information auch durch einen weiteren Schreibvorgang nicht geändert werden kann.

In einer Ausführungsform der Erfindung sind die Mittel zum Fixieren zur irreversiblen Fixierung der Anzeigeelemente ausgebildet. Bei dieser Ausführungsform ist sichergestellt, dass nach zum Beispiel einer Personalisierung der Anzeigevorrichtung die wiedergegebene Information unter keinen Umständen verändert werden kann.

Nach einer weiteren Ausführungsform der Erfindung sind die Mittel zum Fixieren zum reversiblen Fixieren der Anzeigeelemente ausgebildet. Die Fixierung der Anzeigeelemente ist also unter bestimmten Bedingungen wieder lösbar, so dass die von der Anzeigevorrichtung wiedergegebene Information veränderbar ist.

Im Falle eines Personalausweises mit einer Ausführungsform der erfindungsgemäßen Anzeigevorrichtung ist dies vorteilhaft, wenn zum Beispiel aufgrund eines Wohnortwechsels eine Adressänderung in den Personalausweis eingetragen werden soll. In diesem Fall wird die Fixierung der Anzeigeelemente durch eine hierzu autorisierte Person gelöst, um durch einen weiteren Schreibvorgang die geänderte Adresse auf der Anzeigevorrichtung wiederzugeben. Nach diesem weiteren Schreibvorgang werden die Anzeigeelemente erneut fixiert.

Nach einer Ausführungsform der Erfindung erfolgt die Fixierung der Anzeigeelemente durch Eingehung chemischer Bindungen. Beispielsweise erfolgt die Fixierung aufgrund einer Polymerisation.

Nach einer Ausführungsform der Erfindung sind die Anzeigeelemente von einer Flüssigkeit umgeben, die die Bewegung der Anzeigeelemente für die Durchführung des Schreibvorgangs erleichtert. Diese Flüssigkeit beinhaltet ein Monomer, wie zum Beispiel Methylmetacrylat. Nach der Durchführung des Schreibvorgangs wird die Polymerisation zum Beispiel durch UV-Strahlung oder durch Erwärmung ausgelöst. Dadurch werden die Anzeigeelemente irreversibel fixiert.

Nach einer Ausführungsform der Erfindung erfolgt die Fixierung der Anzeigeelemente aufgrund von elektrostatischer Wechselwirkung, zum Beispiel mittels Wasserstoffbrückenbindungen. Beispielsweise sind an den Anzeigeelementen hierzu Fängermoleküle immobilisiert. Die Fixierung der Anzeigeelemente erfolgt dann beispielsweise aufgrund einer Hybridisierung komplementärer Fängermoleküle.

Nach einer Ausführungsform der Erfindung sind an den Anzeigeelementen DNA-Stränge, z.B. Oligonukleotide und DNA, RNA und zu DNA analoge Oligomere, die aus zu Nukleosiden analogen Monomeren aufgebaut sind, wie z.B. Peptid Nukleinsäuren (PNA) oder Morpholinonukleinsäuren, immobilisiert. Auch Heterooligomere aus natürlichen Nukleotiden und zu Nukleotiden analogen Monomeren können als Fängermoleküle dienen.

Nach einer Ausführungsform der Erfindung erfolgt die Fixierung der Anzeigeelemente aufgrund einer Hybridisierung von an den Anzeigeelementen immobilisierten Molekülen mit in der Umgebung der Anzeigeelemente befindlichen zumindest teilweise komplementären Moleküle. Die komplementären Moleküle können dabei an benachbarten Anzeigeelementen und / oder an einem umgebenden Träger und / oder einer Kavität der Anzeigevorrichtung immobilisiert sein, so dass eine Fixierung der Anzeigeelemente relativ zueinander und / oder relativ zu dem Träger bzw. der Kavität erfolgt.

Nach einer Ausführungsform der Erfindung sind die komplementären Moleküle bei Raumtemperatur hybridisiert, so dass die Anzeigeelemente fixiert sind. Zur Durchführung des Schreibvorgangs muss die Hybridisierung zunächst aufgehoben werden, indem die Anzeigevorrichtung beispielsweise erwärmt wird. Aufgrund der Erwärmung werden die intermolekularen Bindungen gelöst, so dass die Anzeigeelemente beweglich werden.

Aufgrund dessen ist die Durchführung des Schreibvorgangs möglich, bei dem die Anzeigeelemente in ihre jeweilige Position bewegt werden, die durch die anzuzeigende Information bestimmt ist. Nach der Durchführung des Schreibvorgangs hybridisieren die komplementären Moleküle wieder, indem die Anzeigevorrichtung beispielsweise abgekühlt wird. Vorzugsweise hat die Anzeigevorrichtung bei einer solchen Ausführungsform mit reversibler Fixierung der Anzeigeelemente einen Zugriffsschutz, so dass ein Schreibvorgang nur von einer hierzu autorisierten Person durchgeführt werden kann.

Nach einer Ausführungsform der Erfindung haben die Fängermoleküle mindestens eine, vorzugsweise mehrere Bindungsstellen. Hierdurch sind hinreichend hohe molekulare Wechselwirkungskräfte beispielsweise bei einer Hybridisierung von Oligonukleotiden erreichbar, so dass die Anzeigeelemente sicher fixiert werden. Beispielsweise werden an den Anzeigeelementen Oligonukleotide mit 20 Basen immobilisiert.

Nach einer Ausführungsform der Erfindung haben die komplementären Moleküle im hybridisiertem Zustand eine andere Farbe als im hybridisiertem Zustand. Hierdurch kann visuell kontrolliert werden, ob tatsächlich eine Hybridisierung und damit eine Fixierung der Anzeigenelementen stattgefunden hat oder nicht.

Nach einer Ausführungsform der Erfindung ist neben dem Anzeigeelement ein Kontrollelement vorgesehen, wobei es sich bei dem Kontrollelement um ein zu dem Anzeigeelement analog aufgebauten Bauteil handelt, welches Partikel, wie zum Beispiel metallische Nanopartikel, insbesondere Edelmetall-Nanopartikel, anstelle der normalen bildgebenden Partikel enthält. Hierdurch kann der Zustand des Bauteils (fixiert / nicht fixiert) und somit auch der einer benachbarten Anzeige beobachtet werden.

Nach einer Ausführungsform der Erfindung sind die Anzeigeelemente aufgrund eines elektrischen und / oder magnetischen Feldes in deren jeweilige durch die anzuzeigende Information bestimmte Position bewegbar.

Nach einer Ausführungsform der Erfindung haben die Anzeigeelemente eine kugelige, sphärische, zylindrische oder polyedrische Form.

Nach einer Ausführungsform der Erfindung haben die Anzeigeelement eine optische Anisomorphie. Beispielsweise sind die Anzeigeelemente bichromatisch oder polychromatisch.

Nach einer Ausführungsform der Erfindung werden zumindest zwei unterschiedliche Sorten jeweils optisch isomorpher Partikel verwendet, wie zum Beispiel schwarze und weiße Partikel. Die unterschiedlichen Sorten der optisch isomorphen Partikel haben zum Beispiel unterschiedliche Ladungen oder unterschiedliche Magnetisierungen, so dass die Partikel aufgrund eines elektrischen Feldes (Elektrophorese) oder durch ein magnetisches Feld bewegt werden können.

Nach einer Ausführungsform der Erfindung erfolgt die Fixierung der Anzeigeelemente untereinander, das heißt es werden chemische Bindungen und / oder intermolekulare Wechselwirkung eingegangen, die die Anzeigeelemente relativ zueinander fixieren.

Nach einer Ausführungsform der Erfindung hat die Anzeigevorrichtung einen Träger für die Anzeigeelemente, wobei die Fixierung alternativ oder zusätzlich relativ zu dem Träger erfolgt.

Nach einer Ausführungsform der Erfindung hat der Träger Kavitäten für die Anzeigeelemente, wobei die Fixierung relativ zu einer Wandung der Kavität oder der Matrix erfolgt.

Nach einer Ausführungsform der Erfindung befinden sich die Anzeigeelemente in einer Flüssigkeit, die die Bewegung der Anzeigeelemente für die Durchführung des Schreibvorgangs erleichtert. Die Flüssigkeit beinhaltet die Mittel zur Fixierung der Anzeigeelemente, also zum Beispiel ein Monomer oder ein komplementäres Molekül für eine Hybridisierung.

In einem weiteren Aspekt betrifft die Erfindung ein Dokument, welches eine erfindungsgemäße Anzeigevorrichtung beinhaltet oder durch eine solche gebildet wird.

Bei dem Dokument handelt es sich beispielsweise um ein Wert- oder Sicherheitsdokument, wie zum Beispiel eine Banknote oder eine Geldkarte und / oder um ein Identifikationsdokument, wie zum Beispiel einen Personalausweis oder Reisepass.

In einem weiteren Aspekt betrifft die Erfindung eine sogenannte Chipkarte. Chipkarten werden auch als SmartCards oder als tragbare Datenträger bezeichnet. Die Chipkarte hat eine erfindungsgemäße Anzeigevorrichtung.

In einem weiteren Aspekt betrifft die Erfindung elektronisches Papier. Das elektronische Papier wird durch eine erfindungsgemäße Anzeigevorrichtung gebildet. Im Vergleich zum aus dem Stand der Technik vorbekannten elektronischem Papier hat das erfindungsgemäße elektronische Papier den Vorteil, dass es auch für Dokumentationszwecke geeignet ist, da sich die Anzeigeelemente nach der Durchführung des Schreibvorgangs fixieren lassen.

Nach einer bevorzugten Ausführungsform der Erfindung hat die erfindungsgemäße Anzeigevorrichtung bzw. das erfindungsgemäße Dokument, die Chipkarte oder das elektronische Papier, einen elektronischen Speicher zur Speicherung einer anzuzeigenden Information sowie elektronische Mittel zur Ansteuerung der Anzeigevorrichtung, so dass die Information angezeigt wird. Vorzugsweise ist eine kryptographische Einheit vorgesehen, die als Zugriffsschutz für den elektronischen Speicher dient, so dass der Schreibvorgang nur von einer hierzu autorisierten Person durchgeführt werden kann. In einer weiteren Ausführungsform kann die angezeigte Information der Anzeige durch die Chipkarte selbst ausgelesen werden.

Nach einer Ausführungsform der Erfindung dient eine kontaktlose und / oder kontaktbehaftete Schnittstelle zur Übertragung der anzuzeigenden Information zu dem elektronischen Speicher.

Nach einer Ausführungsform der Erfindung sind die felderzeugenden Elektroden für die Bewegung der Anzeigeelemente Teil der Anzeigevorrichtung. Alternativ verfügt die Anzeigevorrichtung nur über eine solche felderzeugende Elektrode, wobei die andere Elektrode von außen an die Anzeigevorrichtung gebracht wird, um einen Schreibvorgang durchzuführen. Nach einer weiteren Ausführungsform verfügt die Anzeigevorrichtung über keinerlei felderzeugende Mittel. Diese werden zur Durchführung eines Schreibvorgangs an die Anzeigevorrichtung gebracht.

In einem weiteren Aspekt betrifft die Erfindung ein Gerät zur Personalisierung eines Dokuments, einer Chipkarte oder von elektronischem Papier, welches eine erfindungsgemäße Anzeigevorrichtung beinhaltet oder durch eine solche gebildet wird. Das Gerät hat Mittel zur Auslösung der Fixierung der Anzeigeelemente, so dass die Position der Anzeigeelemente nach der Durchführung des Schreibvorgangs irreversibel oder reversibel festgelegt wird. Beispielsweise verfügt das Gerät hierzu über eine UV-Lampe, um eine Polymerisation anzuregen, oder eine Temperierungsvorrichtung, um durch eine Temperaturerhöhung eine Hybridisierung komplementärer Moleküle aufzuheben, so dass die Anzeigeelemente beweglich werden, bzw. durch eine Abkühlung eine erneute Hybridisierung der komplementären Moleküle zu ermöglichen.

In einem weiteren Aspekt betrifft die Erfindung ein Verfahren zur Personalisierung eines Dokuments, einer Chipkarte oder von elektronischem Papier. Hierbei wird nach der Durchführung eines Schreibvorgangs eine Fixierung der Anzeigeelemente in der dann eingenommenen Position ausgelöst.

In einem weiteren Aspekt betrifft die Erfindung ein Computerprogrammprodukt, insbesondere ein digitales Speichermedium, mit ausführbaren Instruktionen zur Durchführung eines Verfahrens zur Personalisierung.

Im weiteren werden bevorzugte Ausführungsformen der Erfindung mit Bezugnahme auf die Zeichnungen näher erläutert. Es zeigen:
- Figur 1: eine erste Ausführungsform einer erfindungsgemäßen Anzeigevorrichtung mit rotierbaren bichromatischen Anzeigeelementen,
- Figur 2: die Anzeigevorrichtung der Figur 1 nach der Fixierung der Anzeigeelemente,
- Figur 3: eine Ausführungsform einer erfindungsgemäßen Anzeigevorrichtung mit einem in der Kavität befindlichen Monomer,
- Figur 4: eine Ausführungsform einer erfindungsgemäßen Anzeigevorrichtung mit monochromatischen Partikeln,
- Figur 5 A-D: ein einzelnes Anzeigeelement einer Ausführungsform einer erfindungsgemäßen Anzeigevorrichtung, bei der die Fixierung aufgrund von intermolekularen Wechselwirkungen erfolgt,
- Figur 6: eine Ausführungsform einer erfindungsgemäßen Vorrichtung mit nur einer felderzeugenden Elektrode,
- Figur 7: die Ausführungsform der Figur 6 mit einer weiteren von außen an die Anzeigevorrichtung angelegte felderzeugende Elektrode,
- Figur 8: eine Ausführungsform einer erfindungsgemäßen Anzeigevorrichtung mit einer dichten Packung der Anzeigeelemente,
- Figur 9: die Anzeigevorrichtung der Figur 8, nachdem die Anzeigeelemente durch Vernetzung untereinander fixiert worden sind,
- Figur 10: ein Blockdiagramm einer Ausführungsform eines erfindungsgemäßen Dokuments und eines erfindungsgemäßen Personalisierungsgeräts,
- Figur 11: ein Flussdiagramm zur Darstellung einer bevorzugten Arbeitsweise des Dokuments bzw. des Personalisierungsgeräts der Figur 10,
- Figur 12: ein Blockdiagramm einer weiteren Ausführungsform eines erfindungsgemäßen Dokuments und eines erfindungsgemäßen Personalisierungsgeräts,
- Figur 13: ein Flussdiagramm zur Darstellung einer bevorzugten Ausführungsform des Dokuments bzw. des Personalisierungsgeräts der Figur 12.

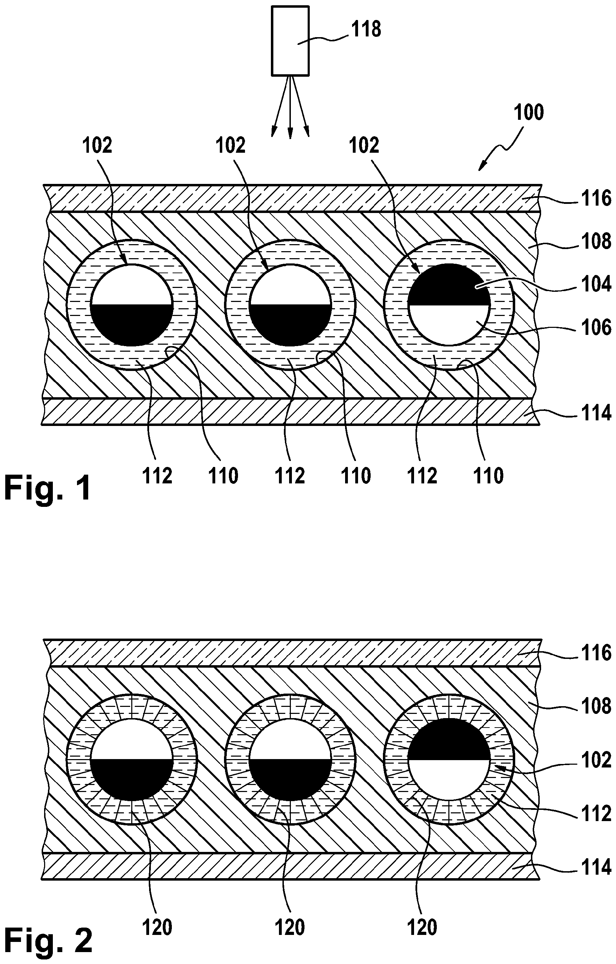

Die Anzeigevorrichtung 100 der Figur 1 hat mehrere Anzeigeelemente 102. In der Figur 1 sind drei solcher Anzeigeelemente 102 exemplarisch dargestellt. In dem hier betrachteten Ausführungsbeispiel sind die Anzeigeelemente 102 kugelförmig oder zylindrisch ausgebildet; es sind jedoch auch andere Sphären- oder Polyederformen möglich.

Die Anzeigeelemente 102 haben eine elektrische und eine entsprechende optische Anisotropie. Wenn beispielsweise ein Anzeigeelement 102 kugelförmig ausgebildet ist, so hat die eine Halbkugel 104 des Anzeigeelements 102 eine erste Farbe, wie zum Beispiel Schwarz und eine erste Ladung, und die zweite Halbkugel 106 hat eine zweite Farbe, wie zum Beispiel Weiß und eine entgegengesetzte Ladung.

Die Anzeigevorrichtung 100 hat eine Matrix 108, in der Hohlräume oder Kavitäten 110 gebildet sind, wobei in dem hier betrachteten Ausführungsbeispiel jede der Kavitäten 110 zur Aufnahme eines der Anzeigeelemente 102 ausgebildet ist. Die Kavitäten 110 haben einen etwas größeren Durchmesser als die Anzeigeelemente 102, so dass die Anzeigeelemente 102 in ihren jeweiligen Kavitäten 110 beweglich sind.

Vorzugsweise befindet sich ein flüssiges Medium 112 in den Kavitäten 110, um eine rotatorische Bewegung der Anzeigeelemente 102 zu erleichtern.

Bei der Matrix 108 kann es sich zum Beispiel um ein flexibles Elastomer handeln.

Unterhalb der Matrix 108 befindet sich eine Elektrode 114. Auf der gegenüberliegenden Seite der Matrix 108 ist eine transparente Gegenelektrode 116 angeordnet. Vorzugsweise ist die Elektrode 114 matrixförmig ausgebildet, so dass die einzelnen Anzeigeelemente 102 mittels Wort- und Bit-Leitungen angesteuert werden können.

Zur Durchführung eines Schreibvorgangs werden durch Anlegen geeigneter Steuerungssignale an die Elektrode 114 elektrische Felder so erzeugt, dass sich die Anzeigeelemente 102 in die in der Figur 1 gezeigten gewünschten Positionen drehen.

Nachdem sich die Anzeigeelemente 102 in die durch die anzuzeigende Information vorgegebene Position gedreht haben, werden die Anzeigeelemente 102 in ihrer jeweiligen Position fixiert. Dies kann so erfolgen, dass eine chemische Reaktion des flüssigen Mediums 112 ausgelöst wird, welche zu der gewünschten Fixierung führt.

Hierzu kann das flüssige Medium 112 ein Monomer beinhalten, wie zum Beispiel Methylmetacrylat. Zur Fixierung der Anzeigeelemente wird nach der Durchführung des Schreibvorgangs die Polymerisation dieses Monomers angeregt.

Dies kann zum Beispiel durch Einschalten einer Strahlungsquelle 118, die oberhalb der transparenten Gegenelektrode 116 angeordnet ist, erfolgen. Beispielsweise kann durch von der Strahlungsquelle 118 ausgehende ultraviolette (UV) Strahlung die Polymerisation des in dem flüssigen Medium 112 befindlichen Monomers angeregt werden, so dass es zur Ausbildung der in der Figur 2 schematisch dargestellten polymeren Verbindungen 120 kommt, welche die Anzeigeelemente 102 zumindest in deren rotatorischen Freiheitsgrad durch Verbindung mit einer Wandung der Kavitäten 110 beschränken.

Dadurch sind die rotatorischen Positionen der Anzeigeelemente und damit auch die auf der Anzeigevorrichtung wiedergegebene Information irreversibel festgelegt. Auch wenn nachfolgend durch einen weiteren Schreibvorgang versucht wird, eine andere Information auf der Anzeigevorrichtung wiederzugeben, indem entsprechende elektrische Felder von den Elektroden 114, 116 erzeugt werden, so bleibt es doch bei den in der Figur 2 gezeigten Positionen der Anzeigeelemente, da diese aufgrund der polymeren Verbindungen 120 daran gehindert sind, in deren entgegengesetzte rotatorische Position "umzukippen".

Bei einem solchen weiteren Schreibvorgang kann es zwar aufgrund der Dehnbarkeit der polymeren Verbindungen 120 zu einer gewissen Drehung der Anzeigeelemente 102 kommen, jedoch nicht zu einem Umschalten oder Umkippen der Anzeigeelemente 102. Nach dem Abschalten des Feldes für den Schreibvorgang relaxieren die polymeren Verbindungen 120 weitgehend, so dass sich die Anzeigeelemente 102 wieder in deren festgelegte Position zurückdrehen.

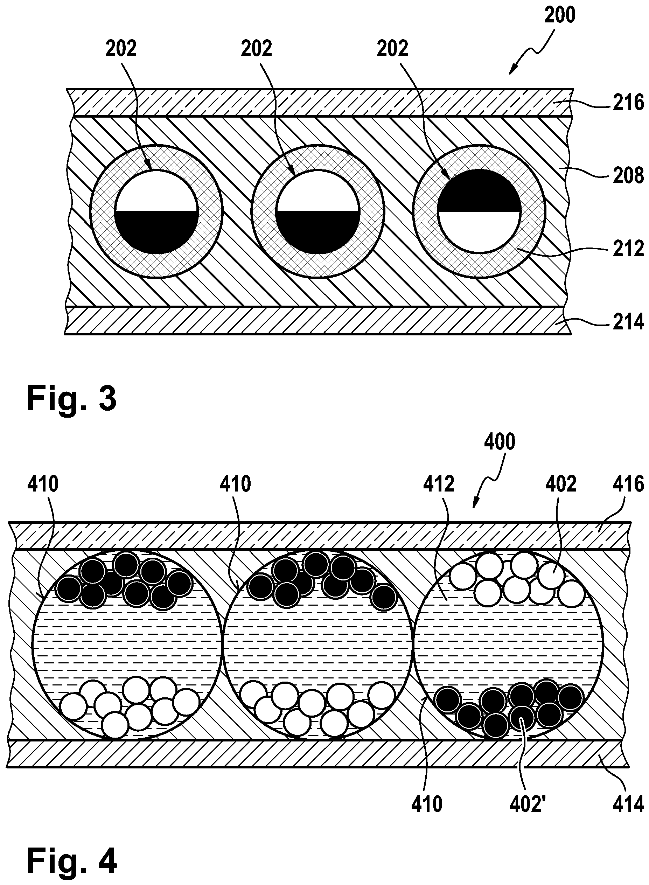

Die Figur 3 zeigt eine weitere Ausführungsform einer Anzeigevorrichtung. Einander entsprechende Elemente der nachfolgenden Figuren sind dabei mit entsprechenden Bezugszeichen, wie in den Figuren 1 und 2 gekennzeichnet.

Bei der Ausführungsform der Anzeigevorrichtung 200 der Figur 3 erfolgt die Fixierung der Anzeigeelemente 202 durch eine chemische Reaktion des flüssigen Mediums 212, so dass sich dieses vollständig verfestigt. Auch bei dieser chemischen Reaktion kann es sich um eine Polymerisation eines Monomers handeln.

Die Figur 4 zeigt eine Ausführungsform der Anzeigevorrichtung 400, bei der jeder Bildpunkt durch mehrere monochromatische Anzeigeelemente 402 bzw. 402' gebildet wird. Jede der Kavitäten 410 ist dabei für die Erzeugung mehrerer Bildpunkte der Anzeigevorrichtung 400 vorgesehen. In jeder der Kavitäten 410 befinden sich mehrere Anzeigeelemente 402 einer ersten Farbe, wie zum Beispiel Weiß und einer ersten Ladung und Anzeigeelemente 402' einer anderen Farbe, wie zum Beispiel Schwarz, und einer entgegengesetzten Ladung.

Die Anzeigeelemente 402, 402' sind in dem flüssigen Medium 412 zum Beispiel durch Elektrophorese beweglich. Durch geeignete Ansteuerung der Elektroden 414 und 416 werden dabei in den Kavitäten 410 jeweils elektrische Felder erzeugt, so dass sich die Anzeigeelemente 402 bzw. die Anzeigeelemente 402' entweder in Richtung auf die Gegenelektrode 416 oder in Richtung auf die Elektrode 414 zu bewegen und sich dort sammeln, wodurch jeweils ein Bildpunkt erzeugt wird.

Nach der Durchführung eines Schreibvorgangs, wie in der Figur 4 dargestellt, können die Anzeigeelemente 402 bzw. 402' fixiert werden, indem zum Beispiel eine chemische Reaktion des flüssigen Mediums 412 ausgelöst wird. Auch bei dieser Ausführungsform kann dies durch Polymerisation von in dem flüssigen Medium 412 befindliche Monomere erfolgen.

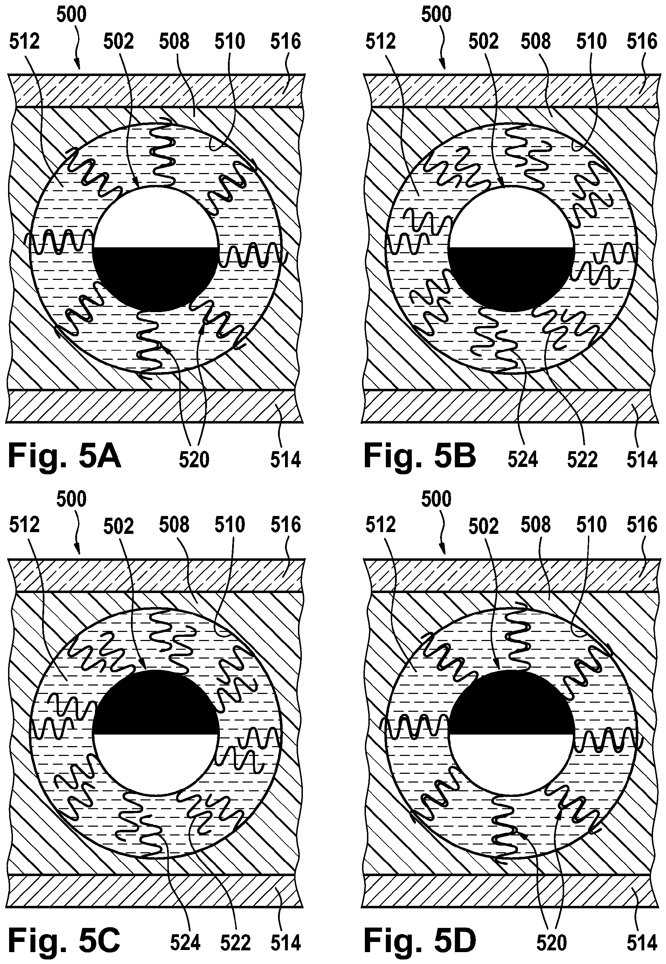

Die Figur 5 zeigt exemplarisch ein einzelnes Anzeigeelement 502 einer Anzeigevorrichtung 500.

An der Oberfläche des Anzeigeelements 502 sind Fängermoleküle 522 befestigt, das heißt immobilisiert. An der Wandung der Kavität 510 beziehungsweise in der Matrix sind Fängermoleküle 524 immobilisiert, die zu den Fängermolekülen 522 zumindest partiell komplementär sind.

Bei Raumtemperatur hybridisieren je zwei komplementäre Fängermoleküle 522, 524, so dass es zur Ausbildung der Verbindungen 520 zwischen der Wandung der Kavität 510 und dem Anzeigeelement 502 kommt, wie in der Figur 5A dargestellt. Durch diese Verbindungen 520 wird das Anzeigeelement 502 zumindest in seinem rotatorischen Freiheitsgrad beschränkt.

Zur Durchführung eines Schreibvorgangs wird die Anzeigevorrichtung 500 auf eine erhöhte Temperatur, zum Beispiel 80°C, erhitzt, so dass sich die Verbindungen 520 lösen, wie in der Figur 5B dargestellt. Aufgrund der Lösung der Verbindungen 520 kann sich nunmehr das Anzeigeelement 502 in dem flüssigen Medium 512 im Inneren der Kavität 510 zur Durchführung eines Schreibvorgangs drehen. Das Ergebnis eines Schreibvorgangs ist in der Figur 5C dargestellt, wonach das Anzeigeelement 502 in seine umgekehrte Position gedreht worden ist. Das Anzeigeelement 502 zeigt jetzt also einen schwarzen statt einen weißen Bildpunkt.

Zur erneuten Fixierung des Anzeigeelements 502 wird die Anzeigevorrichtung 500 wieder zum Beispiel auf Raumtemperatur abgekühlt, so dass die Fängermoleküle 522, 524 wieder hybridisieren und die Verbindungen 520 wieder hergestellt werden, wie in der Figur 5D dargestellt ist.

Beispielsweise handelt es sich bei den Fängermolekülen 522, 524 um zumindest partiell komplementäre Oligonukleotide. Bei Raumtemperatur liegen die komplementären Oligonukleotide in der Form einer Doppelhelix vor, so dass die Verbindungen 520 resultieren. Vorzugsweise wird eine Verbindung 520 durch bevorzugt ca. 20 Basen-Paare gebildet.

Durch Erhöhung der Temperatur wird die jeweilige Doppelhelix aufgeschmolzen, so dass die freie Rotation des Anzeigeelements 502 wieder möglich ist (vgl. hierzu die Figuren 5B und C).

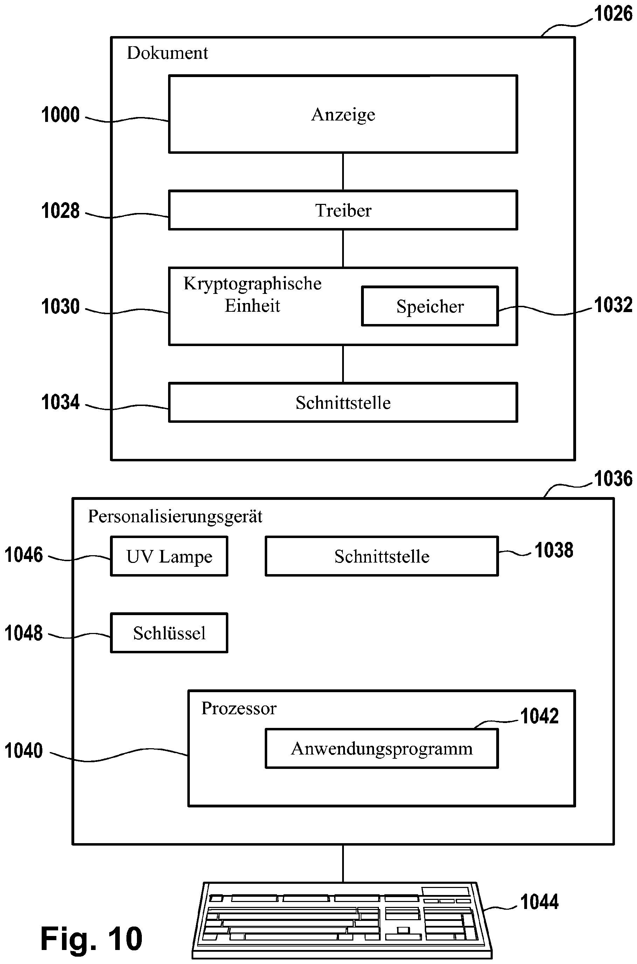

Mit Hilfe der Fängermoleküle 522, 524 ist also eine reversible Fixierung der Anzeigeelemente 502 der Anzeigevorrichtung 500 möglich. Vorzugsweise ist ein Schutzmechanismus vorgesehen, so dass ein Schreibvorgang nur nach einer zuvorigen erfolgreichen Authentisierung vorgenommen werden kann. Entsprechende Ausführungsformen werden mit Bezugnahme auf die Figuren 10 bis 13 weiter unten näher erläutert.

In einer Ausführungsform kann eines der beiden Fängermoleküle primär in nicht freier Form vorliegen, so dass es zwischen den beiden Molekülen zum Beispiel aus sterischen Gründen nicht zur Wechselwirkung kommen kann. Wird nun über einen Prozess, zum Beispiel bevorzugt durch eine lichtinduzierte Reaktion, die Schutzgruppe von dem einem Fängermolekül abgespalten werden, so kann es nach dem Schlüssel-Schloss-Prinzip zu einer Anbindung kommen. Mögliche Ausführungsformen können zum Beispiel Biotin und Avidin (sowie Derivate) oder Antikörper und Antigen enthalten. Geeignete Schutzgruppen können dem Stand der Technik, zum Beispiel Lehrbüchern der organischen Chemie oder der Biochemie, entnommen werden und sind dem Sachkundigem bekannt.

Nach einer Ausführungsform werden die Fängermoleküle 522, 524 so gewählt, dass deren Hybridisierung zu einem Farbumschlag führt. Dadurch kann visuell leicht kontrolliert werden, ob die Anzeigeelemente 502 bereits fixiert sind oder nicht.

In einer weiteren Ausführungsform können für die Herstellung eines Kontrollanzeigeelements die Fängermoleküle 522, 524 zum Beispiel an Gold-Nanopartikel angebunden werden. Als Fängermoleküle können beispielsweise Oligonukleotide verwendet werden. Im hybridisiertem Zustand ergibt sich durch eine Wechselwirkung der Plasmonen eine andere Farbe als im freien Zustand.

Ferner kann durch gezielte Auswahl der Oligonukleotide die Temperatur festgelegt werden, bei denen sich die Verbindungen 520 lösen. Diese Temperatur kann über die Länge der Oligonukleotide, der Länge von deren komplementären Bereich und / oder über Fehlstellen in dem komplementären Bereich erfolgen. Die korrekte Übergangstemperatur, bei der die Verbindungen 520 gelöst werden, kann ein weiteres Sicherheitsmerkmal darstellen.

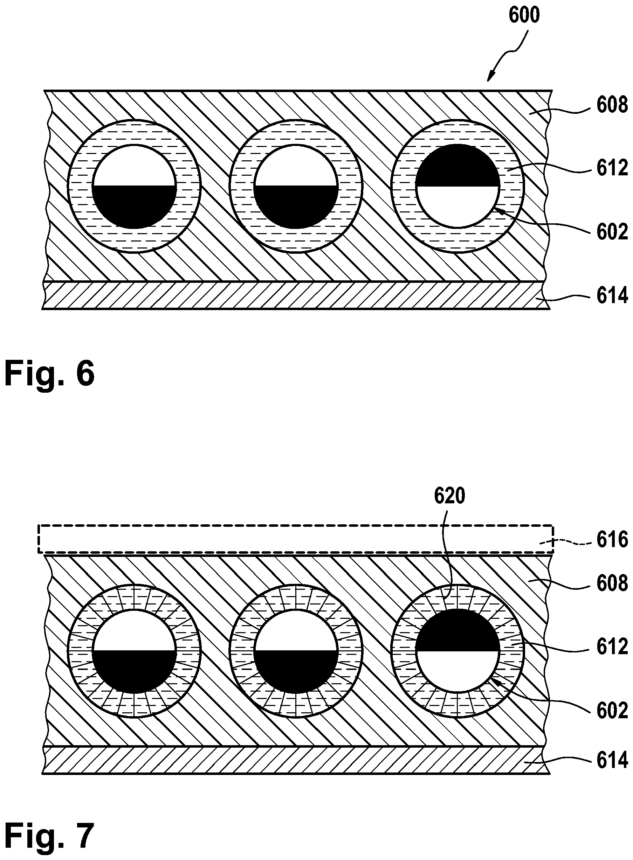

Die Figur 6 zeigt eine Ausführungsform der Anzeigevorrichtung 600, die nur eine Elektrode 614, aber keine Gegenelektrode aufweist. Zur Durchführung eines Schreibvorgangs wird ein Schreibgerät mit einer Gegenelektrode 616 verwendet oder ein Stift, durch den diese Gegenelektrode gebildet wird.

Die Figur 7 zeigt in gestrichelten Linien die Gegenelektrode 616 eines externen Schreibgeräts. Nach der Durchführung des Schreibvorgangs kann die Gegenelektrode 616 wieder entfernt werden. Vor oder nach der Entfernung der Gegenelektrode aber nach Durchführung des Schreibvorgangs wird die Fixierung der Anzeigeelemente 602 ausgelöst, so dass die Verbindungen 620, zum Beispiel durch Knüpfung einer chemischen Bindung oder durch intermolekulare Wechselwirkung, entstehen.

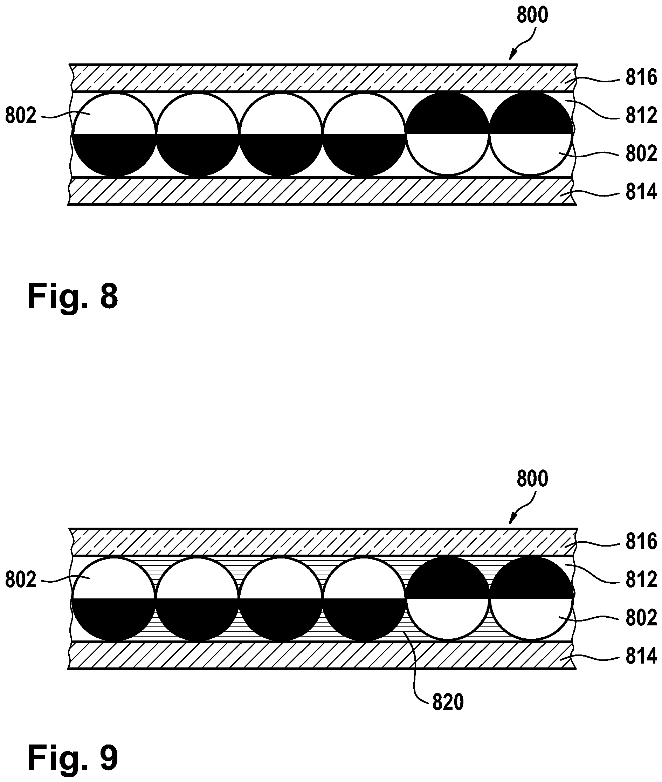

Die Figur 8 zeigt eine Ausführungsform der Anzeigevorrichtung 800 mit einer dichten Packung der Anzeigeelemente 802, welche unmittelbar nebeneinander angeordnet sind. Der Bereich zwischen der Elektrode 814 und der Gegenelektrode 816 wird durch die Anzeigeelemente 802 und das die Anzeigeelemente 802 umgebene flüssige Medium 812 ausgefüllt.

Durch eine geeignete Auslösung der Fixierung der Anzeigeelemente 802 bilden sich chemische oder molekulare Bindungen 820 zwischen den Anzeigeelementen 802. Zusätzlich können solche Bindungen 820 auch zwischen den Anzeigeelementen 802 und der Elektrode 814 bzw. der Gegenelektrode 816 ausgebildet werden.

Die Figur 10 zeigt eine Ausführungsform eines Dokuments 1026 mit einer Anzeigevorrichtung 1000, bei der es sich um eine der Ausführungsformen der Figuren 1 bis 9 handeln kann.

Das Dokument 1026 hat einen Treiber 1028 für die Anzeigevorrichtung 1000. Der Treiber 1028 generiert geeignete Steuerungssignale für die Elektrode der Anzeigevorrichtung 1000, so dass die Anzeigeelemente der Anzeigevorrichtung 1000 in die durch die anzuzeigende Information bestimmten Positionen bewegt werden.

Das Dokument 1026 hat ferner eine kryptographische Einheit 1030, die als Zugriffschutz für einen elektronischen Speicher 1032 dient. Der elektronische Speicher 1032 ist vorzugsweise ein nicht-flüchtiger Speicher, der zur Speicherung der auf der Anzeigevorrichtung 1000 wiederzugebenden Information dient.

In einer erfindungsgemäßen Ausführung kann auch das Anzeigeelement 1000 als nichtflüchtiger Speicher 1032 verwendet werden, in dem das durch die Fixierung stabilisierte elektrostatische Feld des Anzeigeelements ausgelesen wird.

Eine kontaktlose und / oder kontaktbehaftete Schnittstelle 1034 ist mit der kryptographischen Einheit 1030 verbunden. Die kontaktlose und / oder kontaktbehaftete Schnittstelle 1034 dient zum Empfang von Signalen von einem Personalisierungsgerät 1036, welches über eine entsprechende kontaktlose und / oder kontaktbehaftete Schnittstelle 1038 verfügt.

Das Personalisierungsgerät 1036 hat zumindest einen Prozessor 1040 zur Durchführung der Instruktionen eines Anwendungsprogramms 1042. Zum Beispiel über eine Tastatur 1044 kann ein Nutzer die auf der Anzeigevorrichtung 100 wiederzugebenden Informationen eingeben.

Das Personalisierungsgerät 1036 beinhaltet eine Vorrichtung 1046 zur Auslösung der Fixierung der Anzeigeelemente der Anzeigevorrichtung 1000. Beispielsweise kann es sich bei der Vorrichtung 1046 um eine UV-Lampe handeln, um eine Polymerisation auszulösen (vgl. hierzu insbesondere die Ausführungsformen der Figuren 2, 3 und 4).

Vorzugsweise ist das Personalisierungsgerät 1036 zur Eingabe und / oder Speicherung eines kryptographischen Schlüssels 1048 vorgesehen.

Zur Durchführung einer Personalisierung wird das Dokument 1026 in das Personalisierungsgerät 1036 unter dessen Vorrichtung 1046 gelegt. Ein Nutzer startet das Anwendungsprogramm 1042 und gibt die Personalisierungsinformation, wie zum Beispiel Name und Wohnort des Trägers des Dokuments 1026, in das Personalisierungsgerät 1036 ein.

Über die kontaktlose und / oder kontaktbehaftete Schnittstellen 1034, 1038 und unter Verwendung der kryptographischen Einheit 1030 wird ein Authentisierungsprotokoll unter Verwendung des kryptographischen Schlüssels 1048 durchgeführt. Nach erfolgreicher Authentisierung des Benutzers werden die Personalisierungsinformationen von dem Personalisierungsgerät 1036 über die kontaktlose und / oder kontaktbehaftete Schnittstellen 1038, 1034 zu dem Dokument 1026 übertragen und dort in dem elektronischen Speicher 1032 gespeichert.

Der Treiber 1028 steuert die Anzeigevorrichtung 1000 dementsprechend an, so dass die Personalisierungsinformation auf der Anzeigevorrichtung 1000 wiedergegeben wird. Daraufhin wird die Vorrichtung 1046 aktiviert, das heißt es wird beispielsweise die UV-Lampe eingeschaltet, um die Anzeigeelemente der Anzeigevorrichtung 1000 zu fixieren.

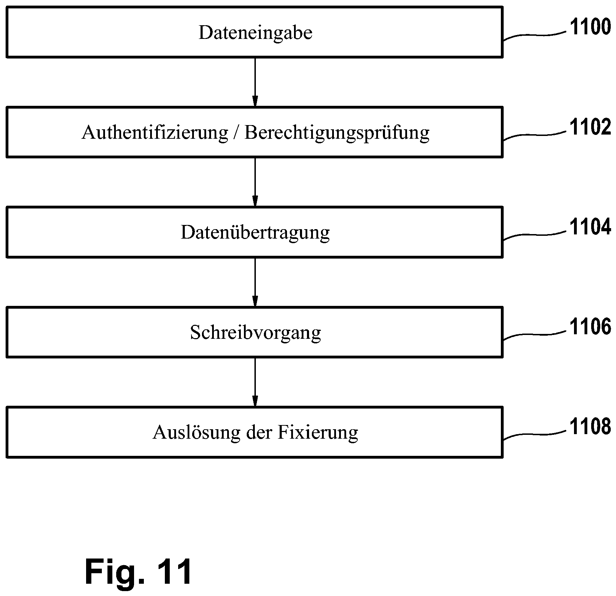

Eine Ausführungsform des entsprechenden Verfahrens ist in der Figur 11 dargestellt. In dem Schritt 1100 erfolgt eine Dateneingabe von Personalisierungsinformationen.

Danach erfolgt in dem Schritt 1102 eine Authentifizierung und / oder eine Berechtigungsprüfung für die Durchführung eines Schreibvorgangs. Dabei kann geprüft werden, ob das Personalisierungsgerät hierfür zugelassen ist und / oder ob der Benutzer des Personalisierungsgeräts hierzu autorisiert ist. Dementsprechend kann für die Authentifizierung und / oder Berechtigungsprüfung mit einem oder mehreren kryptographischen Schlüsseln gearbeitet werden, die von der kryptographischen Einheit (vgl. kryptographische Einheit 1030) des Dokuments ausgewertet werden.

Nach erfolgreicher Authentifizierung und / oder Berechtigungsprüfung erfolgt in dem Schritt 1104 die Datenübertragung der Personalisierungsinformationen von dem Personalisierungsgerät zu dem Dokument und deren Speicherung in dessen elektronischen Speicher.

In dem Schritt 1106 erfolgt ein Schreibvorgang, das heißt die von dem Dokument empfangene Personalisierungsinformation wird auf dessen Anzeigevorrichtung wiedergegeben. In dem Schritt 1108 wird eine Fixierung der Anzeigeelemente ausgelöst, um die auf der Anzeigevorrichtung wiedergegebenen Informationen "einzufrieren".

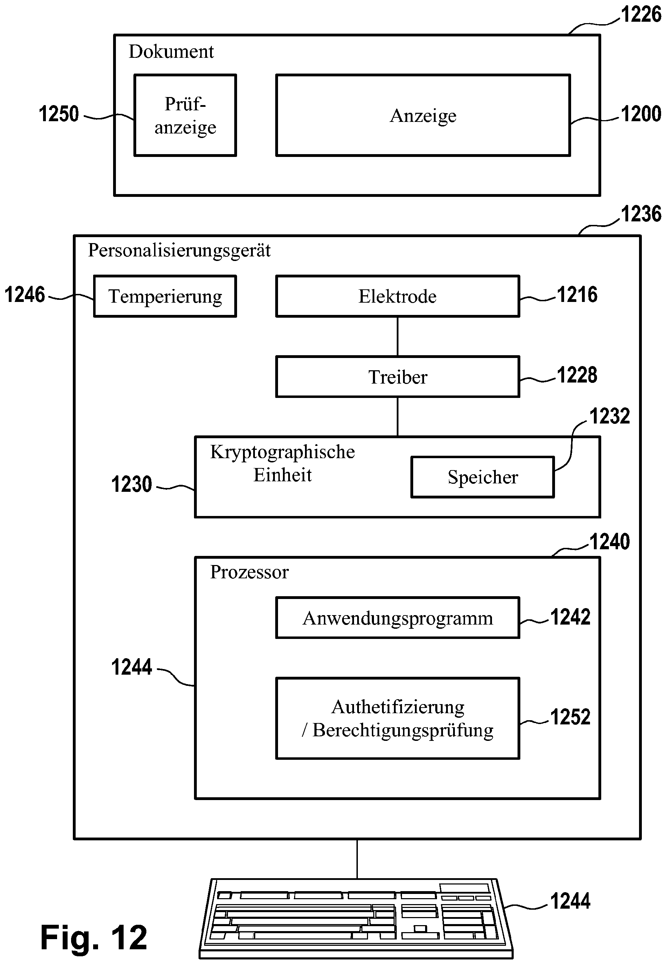

Die Figur 12 zeigt eine Ausführungsform des Dokuments 1226 und des Personalisierungsgeräts 1236. In der Ausführungsform der Figur 12 wird das Dokument 1226 im wesentlichen durch dessen Anzeige 1200 gebildet. Zusätzlich kann das Dokument 1226 eine mit der Anzeigevorrichtung 1200 baugleiche aber bevorzugt kleinere Prüfanzeige 1250 aufweisen.

Der Prozessor 1240 des Personalisierungsgeräts 1236 dient neben der Durchführung des Anwendungsprogramms 1242 auch zur Durchführung eines Programms 1252 zur Durchführung einer Authentifizierung und / oder Berechtigungsprüfung mit Hilfe der kryptographischen Einheit 1230, so dass nur nach erfolgter Authentifizierung und / oder Berechtigungsprüfung ein lesender und / oder schreibender Zugriff auf den elektronischen Speicher 1232 ermöglicht wird.

Die Anzeigevorrichtung 1200 bzw. die Prüfanzeige 1250 sind hier vorzugsweise entsprechend der Ausführungsform der Figur 5 ausgebildet. Dementsprechend handelt es sich bei der Vorrichtung 1246 um eine Temperierungsvorrichtung, die dazu vorgesehen ist, durch eine Temperaturerhöhung die intermolekularen Wechselwirkung aufzulösen und / oder durch Abkühlung eine Hybridisierung der Moleküle anzustoßen.

Zur Personalisierung des Dokuments 1226 wird wie folgt vorgegangen:

Das Dokument 1226 wird in das Personalisierungsgerät 1236 gelegt, so dass die Elektrode 1216 an der Anzeigevorrichtung 1200 anliegt, um so das erforderliche elektrische Feld für die Drehung der Anzeigeelemente erzeugen zu können.

Nach erfolgter Authentifizierung und / oder Berechtigungsprüfung eines Benutzers des Personalisierungsgeräts 1236 mit Hilfe des Programms 1252 und der kryptographischen Einheit 1230 gibt der Benutzer über das Anwendungsprogramm 1242 Personalisierungsinformationen in das Personalisierungsgerät 1236 ein. Beispielsweise stellt das Anwendungsprogramm 1242 hierzu eine entsprechende Bildschirmmaske zur Verfügung.

Die Personalisierungsinformation wird in dem elektronischen Speicher 1232 gespeichert. Nachdem die Vorrichtung 1246 das Dokument 1226 auf eine Temperatur gebracht hat, bei der die intermolekularen Wechselwirkung aufgelöst worden sind und somit die Anzeigeelemente beweglich sind, steuert der Treiber 1228 die Elektrode 1216 entsprechend der in dem Speicher 1232 gespeicherten Personalisierungsinformation an, so dass diese auf der Anzeigevorrichtung 1200 wiedergegeben wird.

Nachfolgend kann das Dokument 1226 dem Personalisierungsgerät 1236 entnommen werden.

Für die optional vorhandene Prüfanzeige 1250 sowie für die Anzeigevorrichtung 1200 werden im wesentlichen identische Aufbauten verwendet. Die Prüfanzeige 1250 zeichnet sich jedoch dadurch aus, dass die im hybridisierten Zustand und im nicht-hybridisiertem Zustand unterschiedliche Farben aufweist. Durch Betrachtung der Prüfanzeige 1250 kann dadurch leicht festgestellt werden, ob die Hybridisierung aufgrund der Abkühlung des Dokuments 1226 auf die Umgebungstemperatur bereits stattgefunden hat oder nicht und zwar sowohl in der Prüfanzeige 1250 als auch in der Anzeigevorrichtung 1200.

Das Personalisierungsgerät kann auch einen Sensor zur Feststellung des Farbumschlags aufweisen. In dieser Ausführungsform kann das Dokument 1126 dem Personalisierungsgerät erst entnommen werden, nachdem der die Hybridisierung anzeigende Farbumschlag erfolgt ist.

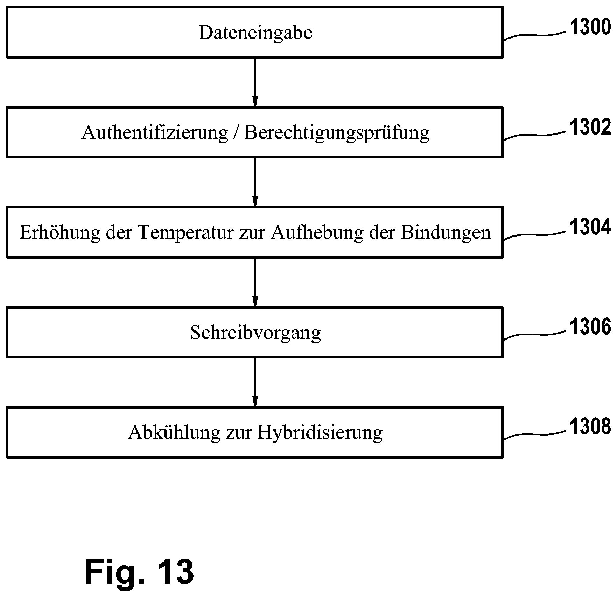

Die Figur 13 stellt eine Ausführungsform dieses Verfahrens anhand eines Flussdiagramms dar. In dem Schritt 1300 erfolgt die Eingabe von Personalisierungsinformation. In dem Schritt 1302 erfolgt eine Authentifizierung und / oder Berechtigungsüberprüfung. Nach erfolgter Authentifizierung und / oder Berechtigungsprüfung werden die Personalisierungsinformationen in dem elektronischen Speicher des Personalisierungsgeräts, der durch die kryptographische Einheit geschützt ist, gespeichert.

In dem Schritt 1304 wird das Dokument auf eine Temperatur gebracht, bei der die Anzeigeelemente beweglich sind. Danach folgt in dem Schritt 1306 der Schreibvorgang der Personalisierungsinformationen und nachfolgend in dem Schritt 1308 die Abkühlung des Dokuments, um durch eine erneute Hybridisierung die Anzeigeelemente und damit die Personalisierungsinformation zu fixieren.

Die Ausführungsform gemäß Figuren 12 und 13 ist besonders vorteilhaft zur dezentralen Ausstellung und Aktualisierung von Ausweisdokumenten, wie Personalsausweisen und Reisepässen. Insbesondere erlauben es die Ausführungsformen der Figuren 12 und 13 auch eine nachträgliche Adressänderung, Namensänderung oder dergleichen in ein Ausweisdokument einzutragen, da die Fixierung der Anzeigeelemente reversibel ist.

Die Erfindung ist aber keineswegs auf Ausweisdokumente und dergleichen beschränkt, sondern kann auch für andere Zwecke, wie zum Beispiel so genannte Chipkarten und elektronisches Papier verwendet werden.

### Bezugszeichenliste

- 100: Anzeigevorrichtung
- 102: Anzeigeelemente
- 104: Halbkugel
- 106: Halbkugel
- 108: Matrix
- 110: Kavität
- 112: flüssiges Medium
- 114: Elektrode
- 116: Gegenelektrode
- 118: Strahlungsquelle
- 120: Verbindungen
- 200: Anzeigevorrichtung
- 202: Anzeigeelemente
- 208: Matrix
- 212: polymerisiertes Medium
- 214: Elektrode
- 216: Gegenelektrode
- 400: Anzeigevorrichtung
- 402: Anzeigeelemente
- 402': Anzeigeelemente
- 412: flüssiges Medium
- 414: Elektrode
- 416: Gegenelektrode
- 500: Anzeigevorrichtung
- 502: Anzeigeelemente
- 508: Matrix
- 510: Kavität
- 512: flüssiges Medium
- 514: Elektrode
- 516: Gegenelektrode
- 520: Verbindung
- 522: Fängermolekül
- 524: Fängermolekül
- 600: Anzeigevorrichtung
- 602: Anzeigeelement
- 608: Matrix
- 612: flüssiges Medium
- 614: Elektrode
- 616: Gegenelektrode
- 620: Verbindung
- 800: Anzeigevorrichtung
- 802: Anzeigeelemente
- 812: flüssiges Medium
- 814: Elektrode
- 816: Gegenelektrode
- 820: Verbindung
- 1000: Anzeigevorrichtung
- 1026: Dokument
- 1028: Treiber
- 1030: kryptographische Einheit
- 1032: elektronischer Speicher
- 1034: kontaktlose und / oder kontaktbehaftete Schnittstelle
- 1036: Personalisierungsgerät
- 1038: kontaktlose und / oder kontaktbehaftete Schnittstelle
- 1040: Prozessor
- 1042: Anwendungsprogramm
- 1044: Tastatur
- 1046: Vorrichtung
- 1048: kryptographischer Schlüssel
- 1200: Anzeigevorrichtung
- 1216: Elektrode
- 1226: Dokument
- 1228: Treiber
- 1230: kryptographische Einheit
- 1232: elektronischer Speicher
- 1236: Personalisierungsgerät
- 1240: Prozessor
- 1242: Anwendungsprogramm
- 1244: Tastatur
- 1246: Vorrichtung
- 1250: Prüfanzeige
- 1252: Programm

## Patentansprüche

1. Anzeigevorrichtung mit mehreren Anzeigeelementen (102; 202; 402; 502; 602; 802), die zur Durchführung eines Schreibvorgangs beweglich angeordnet sind, und mit Mitteln (112, 120; 212; 412; 512, 520, 522, 524; 612; 812; 1046; 1246) zur Fixierung der Anzeigeelemente in den jeweils nach der Durchführung des Schreibvorgangs eingenommenen Positionen,
a. **gekennzeichnet dadurch dass** die Mittel zur Fixierung der Anzeigeelemente dazu ausgebildet sind, die Anzeigeelemente durch Eingehen chemischer Bindungen, nämlich durch Polymerisation zu fixieren,
oder
b. **gekennzeichnet dadurch dass** die Mittel zur Fixierung der Anzeigeelemente aufgrund von intermolekularer Wechselwirkung (520) ausgebildet sind, wobei an den Anzeigeelementen Fängermoleküle (522) in Form Oligonukleotiden, Oligomeren und/oder Heterooligomeren befestigt sind,
wobei es sich bei den Fängermolekülen um ein Molekülpaar handelt, das eine Bindung nach dem Schlüssel-Schloss-Prinzip eingehen kann, und/oder
c. **gekennzeichnet dadurch dass** die Mittel zur Fixierung der Anzeigeelemente aufgrund einer Hybridisierung zumindest teilweise komplementärer Moleküle ausgebildet sind.

2. Anzeigevorrichtung nach Anspruch 1, wobei die Mittel zum Fixieren zur irreversiblen Fixierung der Anzeigeelemente ausgebildet sind.

3. Anzeigevorrichtung nach Anspruch 1 oder 2, wobei die Mittel zum Fixieren zur reversiblen Fixierung der Anzeigeelemente ausgebildet sind.

4. Anzeigevorrichtung nach Anspruch 1, wobei eines der komplementären Moleküle mindestens 1, vorzugsweise mindestens 10, besonders bevorzugt etwa 20 Basen aufweist.

5. Anzeigevorrichtung nach einem der vorhergehenden Ansprüche, wobei sich Partikel im Aufbau befinden, bevorzugt anstelle der Anzeigeelemente, welche die Farbe dadurch ändern, dass diese im hybridisierten oder nicht-hybridisiertem Zustand vorliegen, wenn die Mittel zur Fixierung der Anzeigeelemente aufgrund einer Hybridisierung zumindest teilweise komplementärer Moleküle ausgebildet sind.

6. Anzeigevorrichtung nach einem der vorhergehenden Ansprüche, wobei es sich bei den Anzeigeelementen um Nanopartikel handelt.

7. Anzeigevorrichtung nach einem der vorhergehenden Ansprüche, wobei die Anzeigeelemente in zumindest einem rotatorischen und / oder translatorischen Freiheitsgrad beweglich sind und wobei die Fixierung hinsichtlich zumindest eines der Freiheitsgrade erfolgt.

8. Dokument mit zumindest einer Anzeigevorrichtung (100; 200; 400; 500; 600; 800; 1000; 1200) nach einem der vorhergehenden Ansprüche, wobei das Dokument durch Fixierung der Anzeigeelemente personalisiert ist oder personalisierbar ist.

9. Chipkarte mit zumindest einer Anzeigevorrichtung (100; 200; 400; 500; 600; 800; 1000; 1200) nach einem der vorhergehenden Ansprüche 1 bis 7.

10. Gerät für eine Anzeigevorrichtung, ein Dokuments, eine Chipkarte oder für elektronisches Papier nach einem der vorhergehenden Ansprüche 1 bis 9, mit Mitteln (1046; 1246) zur Auslösung der Fixierung der Anzeigeelemente nach der Durchführung des Schreibvorgangs.

11. Verfahren zur Personalisierung einer Anzeigevorrichtung, eines Dokuments, insbesondere eines Wertdokuments oder eines Sicherheitsdokuments, beispielsweise eines Identifikationsdokuments, einer Chipkarte oder von elektronischem Papier nach einem der vorhergehenden Ansprüche 1 bis 9, mit folgenden Schritten:
- Durchführung des Schreibvorgangs,
- Auslösung der Fixierung der Anzeigeelemente.

12. Verfahren nach Anspruch 11, wobei die Fixierung durch eine Strahlungsquelle ausgelöst wird.

13. Verfahren nach Anspruch 11 oder 12, wobei die Fixierung durch Temperierung der Anzeigevorrichtung ausgelöst wird.

14. Computerprogrammprodukt, insbesondere digitales Speichermedium, mit ausführbaren Instruktionen zur Durchführung eines Verfahrens nach einem der Ansprüche 11, 12 oder 13.

## Claims

1. A display device having a plurality of display elements (102; 202; 402; 502; 602; 802), which are arranged movably in order to perform a write procedure, and having means (112, 120; 212; 412; 512, 520, 522, 524; 612; 812; 1046; 1246) for fixing the display elements in their respective positions assumed after the write procedure has been performed,
a. **characterised in that** the means for fixing the display elements are designed to fix the display elements by forming chemical bonds, specifically by polymerisation,
or
b. **characterised in that** the means for fixing the display elements are formed on the basis of intermolecular interaction (520), wherein catcher molecules (522) in the form of oligonucleotides, oligomers and/or heterooligomers are fastened to the display elements,
wherein the catcher molecules are a molecule pairing that can form a bond in accordance with the key-and-lock principle, and/or
c. **characterised in that** the means for fixing the display elements are formed on the basis of a hybridisation of at least partially complementary molecules.

2. The display device according to claim 1, wherein the fixing means are designed for irreversibly fixing the display elements.

3. The display device according to claim 1 or 2, wherein the fixing means are designed for reversible fixing of the display elements.

4. The display device according to claim 1, wherein one of the complementary molecules has at least 1, preferably at least 10, particularly preferably approximately 20 bases.

5. The display device according to any one of the preceding claims, wherein particles are disposed in the structure, preferably instead of the display elements, which particles change the colour in that they are present in the hybridised or non-hybridised state when the means for fixing the display elements are formed on the basis of a hybridisation of at least partially complementary molecules.

6. The display device according to any one of the preceding claims, wherein the display elements are nanoparticles.

7. The display device according to any one of the preceding claims, wherein the display elements are movable in at least one degree of freedom in rotation and/or translation, and wherein the fixing is provided with regard to at least one of the degrees of freedom.

8. A document having at least one display device (100; 200; 400; 500; 600; 800; 1000; 1200) according to any one of the preceding claims, wherein the document is personalised or can be personalised by fixing the display elements.

9. A chip card having at least one display device (100; 200; 400; 500; 600; 800; 1000; 1200) according to any one of preceding claims 1 to 7.

10. An apparatus for a display device, a document, a chip card or for electronic paper according to any one of preceding claims 1 to 9, having means (1046; 1246) for triggering the fixing of the display elements following the execution of the write procedure.

11. A method for personalising a display device, a document, in particular a document of value or a security document, for example an identification document, a chip card, or electronic paper according to any one of the preceding claims 1 to 9, said method having the following steps:
- performing the write procedure,
- triggering the fixing of the display elements.

12. The method according to claim 11, wherein the fixing is triggered by a radiation source.

13. The method according to claim 11 or 12, wherein the fixing is triggered by temperature control of the display device.

14. A computer program product, in particular a digital storage medium, having executable instructions for performing a method according to any one of claims 11, 12 or 13.

## Revendications

1. Dispositif d'affichage avec plusieurs éléments d'affichage (102 ; 202 ; 402 ; 502 ; 602 ; 802) qui sont disposés, mobiles, pour l'exécution d'un processus d'écriture, et avec des moyens (112, 120 ; 212 ; 412 ; 512, 520, 522, 524 ; 612 ; 812 ; 1046 ; 1246) pour l'immobilisation des éléments d'affichage dans des positions adoptées respectivement après l'exécution du processus d'écriture,
a) **caractérisé en ce que**
les moyens pour l'immobilisation des éléments d'affichage sont conçus pour immobiliser les éléments d'affichage par la mise en oeuvre de liaisons chimiques, à savoir par polymérisation,
ou
b) **caractérisé en ce que**
les moyens pour l'immobilisation des éléments d'affichage sont conçus du fait d'interactions intermoléculaires (520), où des molécules pièges (522) sous forme d'oligonucléotides, d'oligomères et/ou d'hétéro-oligomères sont fixées sur les éléments d'affichage,
où, dans le cas des molécules pièges, il s'agit d'une paire moléculaire qui peut entrer dans une liaison selon le principe clé-serrure
et/ou
c) **caractérisé en ce que**
les moyens pour l'immobilisation des éléments d'affichage sont formés du fait d'une hybridation au moins partiellement de molécules complémentaires.

2. Dispositif d'affichage selon la revendication 1, dans lequel les moyens pour l'immobilisation sont conçus pour l'immobilisation irréversible des éléments d'affichage.

3. Dispositif d'affichage selon la revendication 1 ou 2, dans lequel les moyens pour l'immobilisation sont conçus pour l'immobilisation réversible des éléments d'affichage.

4. Dispositif d'affichage selon la revendication 1, dans lequel l'une des molécules complémentaire présente au moins 1, de préférence, au moins 10, de manière particulièrement préférée environ 20, bases.

5. Dispositif d'affichage selon l'une des revendications précédentes, dans lequel les particules se trouvent sur la structure, de préférence à la place des éléments d'affichage, lesquelles modifient la couleur du fait que celles-ci se présentent dans l'état hybridisé ou non hybridisé lorsque les moyens pour l'immobilisation des éléments d'affichage sont conçus du fait d'une hybridisation au moins partiellement de molécules complémentaires.

6. Dispositif d'affichage selon l'une des revendications précédentes, dans lequel il s'agit de nanoparticules dans le cas des éléments d'affichage.

7. Dispositif d'affichage selon l'une des revendications précédentes, dans lequel les éléments d'affichage sont mobiles dans au moins un degré de liberté en rotation et/ou en translation et où l'immobilisation a lieu par rapport à au moins un des degrés de liberté.

8. Document avec au moins un dispositif d'affichage (100 ; 200 ; 400 ; 500 ; 600 ; 800 ; 1000 ; 1200) selon l'une des revendications précédentes, où le document est personnalisé ou peut être personnalisé pour une immobilisation des éléments d'affichage.

9. Carte à puce avec au moins un dispositif d'affichage (100 ; 200 ; 400 ; 500 ; 600 ; 800 ; 1000 ; 1200) selon l'une des revendications 1 à 7.

10. Appareil destiné à un dispositif d'affichage, un document, une carte à puce ou à un papier électronique selon l'une des revendications 1 à 9, avec des moyens (1046 ; 1246) pour le déclenchement de l'immobilisation des éléments d'affichage après l'exécution du processus d'écriture.

11. Procédé de personnalisation d'un dispositif d'affichage, d'un document, notamment d'un document de valeur ou d'un document de sécurité, par exemple, d'un document d'identification, d'une carte à puce ou d'un papier électronique selon l'une des revendications précédentes 1 à 9, avec les étapes suivantes :
- exécution d'un processus d'écriture,
- déclenchement de l'immobilisation des éléments d'affichage.

12. Procédé selon la revendication 11, dans lequel l'immobilisation est déclenchée par une source de rayonnement.

13. Procédé selon la revendication 11 ou 12, dans lequel l'immobilisation est déclenchée par une thermostatation du dispositif d'affichage.

14. Produit de programme informatique, notamment support de stockage numérique, avec des instructions exécutables pour l'exécution d'un procédé selon l'une des revendications 11, 12 ou 13.
